# EUROPEAN PATENT APPLICATION

(11) **EP 4 568 216 A1**
(43) Date of publication of application: **11.06.2025**
(21) Application number: 24215311.2
(22) Date of filing: 26.11.2024
(51) Int. Cl.: H04L 41/12, H04L 41/14, H04L 41/149, H04L 41/5009, H04L 41/50, H04L 43/08, H04L 41/022, H04L 41/00, H04L 41/22

(54) **TOOL TO GUIDE INSTALLERS IN SETTING UP CONNECTED DEVICES(IOT)/SYSTEMS FOR EFFICIENT AND OPTIMAL NETWORK CREATION/UTILIZATION AND PREVENTION OF NETWORK-RELATED ISSUES IN THE FUTURE**

(30) Priority: 08.12.2023 US 202318533361
(71) Applicant: Schneider Electric Buildings Americas, Inc., Carrollton, TX 75006 (US)
(72) Inventor: Prabha, Ramavenkata Siddarthakartikeya, Montreal, QC H2R 2Z5 (CA); Colicchio, Ettore, Montreal, QC H2R 2Z5 (CA)
(74) Representative: Manitz Finsterwald Patent- und Rechtsanwaltspartnerschaft mbB

(57) **Abstract**

A system and method are provided for evaluating a network installation including a network having network devices. The system and method can obtain network information and diagnostic information for the network installation. The network information can include a topology of the network devices or information from which the topology is determined for the network installation. The system and method can further perform an analysis of a quality of the network installation based on at least the diagnostic information and the topology of the network devices to identify an actual and/or potential quality issue(s) for the network installation and to compute a quality index for the network installation; and output the quality index for the network installation. The system and method also can provide prioritized recommendations of potential solutions for the actual or potential quality issue(s).

## Description

### FIELD

This disclosure relates generally to a network installation, and more particularly, to systems and methods to evaluate a quality of a network installation before, during and/or after installation of the network.

### BACKGROUND

A network installation can include numerous network devices, which are manufactured with different specifications by different manufacturers. Different manufacturers can use varied software tools which are device/protocol specific (e.g., proprietary) to evaluate their product/equipment on a network. These tools may serve their purpose but still may not be very effective as they are primarily used in a reactive approach, such as when a problem has already occurred on the network. Such tools may help identify a root cause of the problem once it has occurred but does not provide any solutions to address the problem. As a result, an installer of such network equipment may face configuration issues both at time of installation and post-installation, which can cause network disruption or prevent network use.

There is a need for a software tool or package, which can work across network devices of different manufacturers or manufacturing specification to provide a user (e.g., an installer or technician) with suitable guidance and recommendations for improving quality of an actual or potential network installation before, during and/or after installation of connected devices in a network environment.

### SUMMARY

In accordance with an embodiment, a system is provided for evaluating a network installation including a network having network devices. The system includes a communication device, a memory, and a processor. The processor, which together with the memory, is configured to: obtain network information and diagnostic information for the network installation, the network information including a topology of the network devices or information from which the topology is determinable for the network installation; perform an analysis of a quality of the network installation based on at least the diagnostic information and the topology of the network devices to identify at least one actual or potential quality issue for the network installation and to compute a quality index for the network installation; and output the quality index for the network installation.

In various embodiments, to obtain the network information and the diagnostic information, the processor can be configured to: connect via the communication device to the network to monitor the network and a plurality of the network devices of the network installation; and collect the network information and the diagnostic information.

The processor can be configured to passively or actively monitor the network and a plurality of the network devices of the network installation, and to collect the network information and the diagnostic information.

The processor can be configured to both passively and actively monitor the network and a plurality of the network devices of the network installation, and to collect the network information and the diagnostic information.

Furthermore, the processor can be configured to communicate with the plurality of network devices over the connection using a transmission protocol selected from a plurality of selectable transmission protocols, the plurality of transmission protocols including at least a wireless protocol.

In various embodiments, the diagnostic information can include at least one parameter/metric for a network device/node, at least one parameter/metric comprising a radio or transmission metric, a version of a firmware/software, a traffic metric, a noise metric, a network metric, or a site metric. The at least one actual or potential issue for the network or one or more of the network devices can include a single point of failure, weak signal strengths, Radio Frequency (RF) noisy area, connectivity issue, low battery level, cybersecurity issues, problematic firmware version, or high wireless traffic.

In various embodiments, the quality index can include an aggregate quality index, a worst node quality index, a best node quality index, or a selected node quality index.

In various embodiments, the processor can be further configured to provide prioritized recommendations of potential solutions for the at least one actual or potential quality issue. Furthermore, the potential solution can include one or more of: adding at least one routing device, node location realignment, replacing a battery of one or more network devices, updating firmware/software for one or more of the network devices to a latest version, replacing at least one routing network device with one or more replacement network devices having greater functionality, or installing one or more additional gateways for redundancy. In some embodiments, the processor can be further configured to re-implement the operations of obtaining network information and diagnostic information, performing an analysis of a quality of the network installation, and outputting the quality index, after the network installation is updated according to one or more of the recommendations.

In various embodiments, the processor can be further configured to design or update a design of the installation network before installation or update thereof, and to provide the design or updated design of the installation network to a user, the processor being configured to generate one or more potential installation network designs and to perform an analysis of a quality of the one or more potential network installation designs to provide a new or updated design of the installation network which is optimized or improved.

In a further embodiment, a method of evaluating a network installation including a network having network devices is provided according to operations performed by the system as described above. In another embodiment, a non-transitory computer medium storing computer executable code, which when executed by one or more processors, is configured to implement the method as described above.

It is understood that there are many features, advantages and aspects associated with the disclosed invention, as will be appreciated from the discussions below and drawings.

### BRIEF DESCRIPTION OF THE DRAWINGS

The foregoing features of the disclosure, as well as the disclosure itself may be more fully understood from the following detailed description of the drawings, in which:
FIG. 1 shows an example of a system for evaluating a quality of a network installation in accordance with embodiments of the disclosure;
FIG. 2 illustrates a flow diagram of example process by which to evaluate a quality of a network installation in accordance with embodiments of the disclosure;
FIG. 3A illustrate a flow diagram of an example process by which to evaluate a quality of a network installation in accordance with embodiments of the disclosure;
FIG. 3B illustrate a flow diagram of an example process by which to evaluate a quality of a network installation in accordance with embodiments of the disclosure;
FIG. 4 illustrates an example process by which network information is analyzed in accordance with embodiments of the disclosure;
FIG. 5 illustrates an example of wireless communication provided for a wireless network installation in accordance with embodiments of the disclosure;
FIG. 6 illustrates an example of a network installation (or portion thereof) with a potential issue, such as a potential single-point of failure, in accordance with embodiments of the disclosure;
FIG. 7 illustrates an example of a quality analysis of a network installation, such as an Internet of Things (IoT) Network, in accordance with embodiments of the disclosure;
FIG. 8 illustrates an example chart including various parameters/metrics, which are evaluated from diagnostic information, to compute a quality index for a network device/node of the installation of FIG. 7, in accordance with embodiments of the disclosure;
FIG. 9 illustrates a chart including various parameters/metrics, which are evaluated from diagnostic information, to compute a quality index for another network device/node of the installation of FIG. 7, in accordance with embodiments of the disclosure;
FIG. 10 illustrates a diagram of the example network installation of FIGS. 7-9 showing a quality index for network devices/nodes, in accordance with embodiments of the disclosure; and
FIG. 11 illustrates example components of a computer device or system, in accordance with embodiments of the disclosure.

### DETAILED DESCRIPTION OF EXAMPLE EMBODIMENTS

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

In accordance with an embodiment, a system and, method are provided to evaluate a quality of a network installation (NI) and/or provide an indication of the quality of the installation along with guidance/recommendations for improving a quality of the network installation. The quality may relate to the quality of the performance of the network and/or network devices of the installation. The system and method can be implemented through the use of a software tool or package (e.g., a package of software tools or modules), which can be implemented on a computer device. The software tool or package (hereinafter "software tool") can work across network devices (or equipment) of different manufacturers and/or different communication protocols (e.g., wireless protocols, etc.), which may be employed in a potential or actual network installation to be evaluated. For example, the system and method can be implemented through a single software tool, which can work across connected device manufacturers and communication protocols to analyze a quality of a network installation, can determine (e.g., determine, compute, calculate, derive, generate, etc.) a quality index, value, score or rating (hereinafter "quality index") for providing ease of understanding the output of the tool, can identify and predict network/device configuration issues and provide recommendations to address each or selected identified issues (e.g., at the time of system /device installation), and can indicate priority of issues uncovered during setup to provide optimal resource utilization.

The systems and methods of the present disclosure can provide various technical benefits/advantages, some examples of which are provided as follows:
- Provide a single software tool that can work across manufacturers and wireless and other communication protocols (e.g., the software tool can be Protocol agnostic).
- Provide a diagnostic software tool to debug problems during a maintenance phase of a network installation.
- Assist an installer to set up and/or diagnose a setup of a network environment, such as a Connected IoT System, at a site in such a way as to reduce significantly future network related issues.
- Efficiently predict network issues (including issues related to installation) and provide methods to address each at the time of system installation.
- Provide an easy to understand output for a network installation analysis, e.g., quality of the installation by means of a quality index.
- Effectively prioritize actual or potential issues identified/discovered/found, e.g., during system setup or subsequent testing, and aid in optimal resource utilization.
- Effectively prioritize recommended solutions for the actual or potential issues identified/discovered/found, e.g., during system setup or subsequent testing, and aid in optimal resource utilization.
- Bring in systematic and quantifiable method of installation and thereby reduce installation time or installation update time.
- Passively monitor a network to proactively identify any network issues, during run time (e.g., during a Maintenance phase).
- Provide an installation and/or maintenance tool, which can identify current and predicted connected device or network configuration issues (e.g., operate effectively for both new and existing network installations).
- Inform an installer, technician, project manager, maintenance personnel, or other user of actual or potential issues with the network installation in order of issue priority (e.g., according to a severity of the issue, weighted attributes associate with an issue, type of issue, and so forth).

Accordingly, in various embodiments, the system and method can work across manufacturers, for example, provided all the devices are based on a common communication protocol (e.g., a wireless protocol). In this way, it is possible to fill the void in the market of effective Connected System Installation, Preventive Maintenance and enhancing Customer Experience (CX).

In various embodiments, for an existing installation, the system and method can include joining, connecting to or communicating with a network (such as a wireless network) to passively and/or actively monitor the network and its devices in order to collect network information and diagnostic information. The network information can, for example, include information related to number of routers in range of each device, a network topology/mapping of the network devices, and/or other network information. The collected information can, for example, include the network topology or information from which the topology can be determined or discerned (e.g., through the network information gathered from routing tables (e.g., neighbor data) from the network device(s)). The diagnostic information can include network performance and/or other parameters/metrics (e.g., network and device statistics, number of lost packets, etc.), actual or potential issues(s) with the network installation or its network devices, and other diagnostic information relevant to the analysis of the quality of a network installation. The network and/or diagnostic information may be collected over a predefined time period for use in quality analysis by the software tool. In some embodiments, the network parameters/metrics can be extracted. The network parameter/metrics can include, for example, signal strength, number of hops to destination, number of neighbors for routing redundancy, network channel usage, and/or other parameter/metric for the network/network device. The system and method can further apply analytics using the network information and diagnostic information to provide insights/results. The insight/results can include a quality index ("QI") for the network installation, and identification of existing/actual and/or potential network issues for the network installation, e.g., a list of existing issues which point out any future problems (e.g., potential single-point of failure, etc.) that can arise with the current installation. For example, in some embodiments, the insights/results from the analysis can include a complete/partial list of issues, which can be presented/outputted in a priority order along with prioritized recommendations that can potentially improve the overall quality or quality index of the network installation.

The quality index for the network installation can be an aggregate quality index, a worst device/node quality index, a best node device/quality index and/or a selected device/node quality index. In some embodiments, the quality index can be provided as a graphical representation of quality ranges/levels (e.g., Poor, Fair, Good, etc.). The actual and/or potential issue(s) can include Single point of failures, Weak signal strengths, Radio Frequency (RF) Noisy area, Connectivity issues, Low battery levels, Cybersecurity issues (hardware (h/w), firmware (f/w)), Problematic firmware versions, High wireless traffic, and/or other issues or problems with the network installation. The recommendations of solutions for the issues can include Adding more routing nodes to the installation, Node location realignment, Replacing a battery for a network device(s), Updating the firmware to a latest version for a network device(s), Installing more gateways for redundancy in the installation, and/or other solutions/recommendations to improve the quality of the network installation.

In various embodiments, for a new installation, the system and method can request network information, and provide an installation recommendation(s) based on the inputted network information. The network information can include Site size, Number of routing network devices/nodes (if applicable), Number of end network devices/nodes, Number of gateways, Maximum distance between network devices, Floorplan(s) with placement and scale (if possible), and other network requirements for the network installation. The installation recommendation(s) can be incorporated into a network installation diagram (NID), which may be provided in a suitable electronic format accessible by the user or user device (e.g., JPEG, PNG, etc.).

In various embodiments, the system and method can categorize potential issues and attach a weight to them (e.g., Single point of failure (3), Packet loss (2), Signal strength loss over time (1)); associate network diagnostic information to categories (e.g., Number of neighbor routers belongs to *Single Point of Failure*); collect diagnostic messages and calculate the points (e.g., Only 1 neighbor router = 0 points * weight 3 (see above) = 0); determine total best-case points versus actual points; and generate a quality index; and display the quality index to the user. A quality index can be computed for each network device or the entire network.

These and other example features of the systems and methods are described in detail below with reference to the figures.

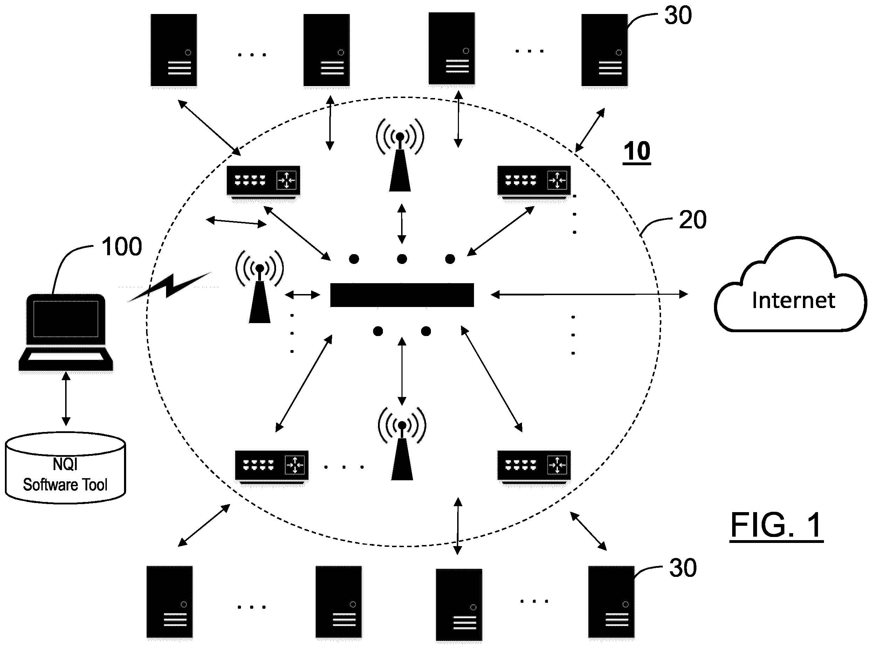

Referring to FIG. 1, there is shown a computer device (or system) 100, which is configured to execute, run or implement one or more application programs, including a software tool (or package) for evaluating a quality of an example network installation 10, in accordance with embodiments of the disclosure. The software tool may be referred to as a network quality indicator (NQI) software tool, and a quality index from the tool may be referred to as a NQI index.

The example network installation 10 can include a plurality of connected network nodes, such as network devices, which are communicatively connected in a network environment to perform communication using a communication protocol. The network devices, also referred to as network nodes, can include intermediary network devices 20 (e.g., routing or other intermediate nodes) and terminal (or end) network devices 30. The network devices 20 can include router(s), gateway(s), firewall(s), switch(es), access point(s) and other devices or systems for facilitating communication between network devices and between the network devices and other networks, such as the Internet. In the example network installation 10, the network can be a wireless network, and the network devices 20, 30 can perform communication using a communication protocol, such as a wireless protocol. The wireless network can be configured in a topology such as for example Point-to-Point (P2P), Star (e.g., Bluetooth Low Energy (BLE), etc.), Mesh (e.g., ZigBee, etc.), and so forth. The network installation 10, which can be evaluated, can be a design of an actual or potential network installation, an actual network installation being set up, or an existing network installation. The site of the network installation can include a facility such as a factory or plant, building, home, a floor of a building, or other structure(s).

The computer device 100 can be a computing device or system, which can include at least a processor(s), memory, and a communication device(s). The computer device 100 can, for example, be a portable or other type of computer, such as a laptop computer, a desktop computer, a computer tablet, a smartphone, a server(s) or other computing device or system. As shown in FIG. 1, the computer device 100 can execute a software tool (e.g., NQI software tool) to perform various functions and operations described herein. The functions and operations can include: obtaining network information and/or diagnostic information for a network installation; analyzing the network installation to determine any actual or potential issue(s) with the network installation (including prioritizing the issue(s)); determining a quality of the network installation, and outputting insights/results of the analysis (or analyses). The insights/results can include a quality index corresponding to the determined quality of the network and/or network device(s), a list of actual and/or potential issues for the network installation, and recommended potential solution(s) for the issues to potentially improve a quality of the network installation. The issues and/or recommended solutions can be prioritized, and selectively outputted to a user in a priority order.

In various embodiments, the software tool may provide for a graphical user interface(s) or GUI(s) to facilitate input/output of data from or to a user (through the computer device or devices communicatively connected thereto). For example, the GUI(s) can be employed to input user commands/selections (including those related to the quality analysis operations), to input information (e.g., network information, diagnostic information, or other relevant information for quality analysis or operation of the computer device 100), to output of insights/results of an analysis of a network installation or other outputs, and to implement input/output operations for the computer device 100 including those described herein.

The network installation can be analyzed based on various information, which may be relevant to assessing a quality of the installation. Such information can include the network information, diagnostic information and/or information determined (e.g., determined, discerned, derived, identified, computed, calculated, etc.) therefrom. For example, in various embodiments, the network installation or aspects thereof can be analyzed based on diagnostic information of the network and/or the connected network devices, a network topology/mapping of the network devices/nodes which may be obtained/determined from the network information, and/or other information which may impact or be relevant to present or future performance or operation of the network installation. The other information can include site/floor plan, wall thickness, distance(s) between network devices, specification of the network devices, environmental conditions at the installation site, application(s) for use on the network installation, network requirements, etc. In various embodiments, the issues also can be prioritized, such as, for example, according to their significance or impact on the actual or potential performance of the network, and a subset of higher priority issues (or all issues) in priority order along with the recommended solution(s) can be outputted such as to a local output device (e.g., a display, printer, electronic message, etc.) on, connected to or associated with the computer device 100 or a remote output device which may be on, connected to or associated with a remote computer device.

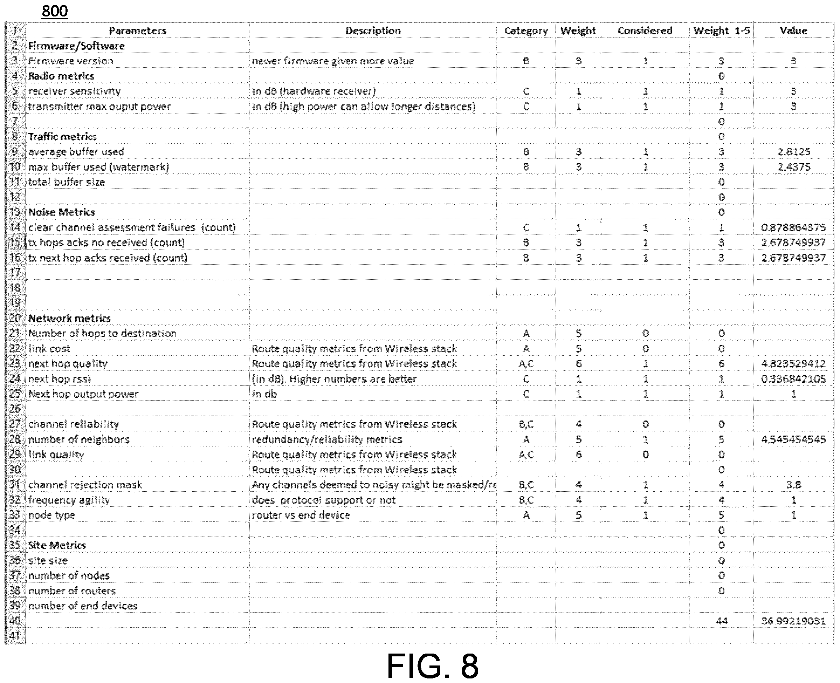

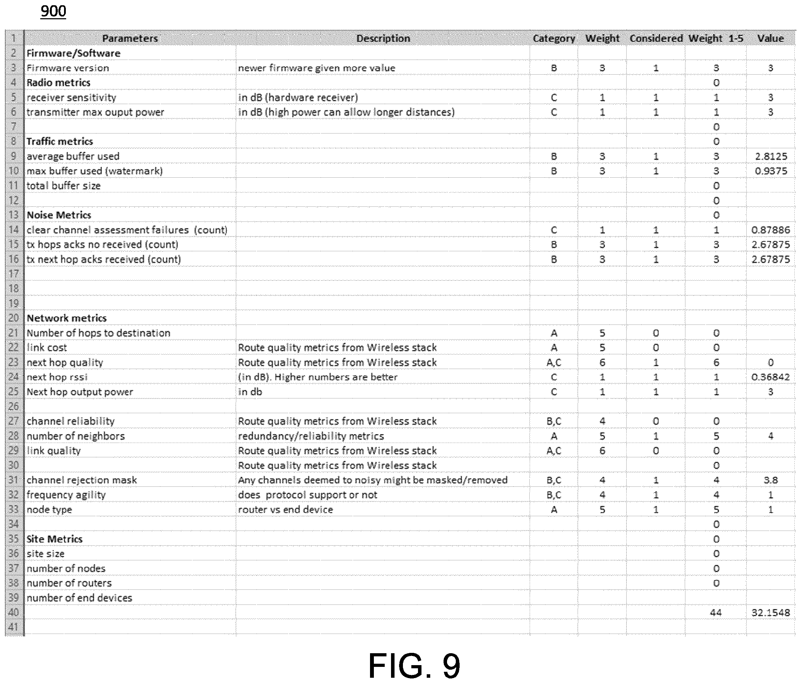

In various embodiments where the network installation is being set up or has been installed, the computer device 100 can obtain network information and diagnostic information by connecting to the network in order to passively and/or actively monitor the network and its network devices. For example, the computer device 100 can communicate with the network and/or at least a plurality of the network devices, using a communication protocol selected from a plurality of communication protocols. The computer device 100 can then collect (e.g., collect/measure/compute/derive) network and diagnostic information obtained through or from communication with the network/devices of the network installation or derived through or from such communication. The network information can, for example, include among other things information on the network topology/mapping or information from which the network topology/mapping can be determined (or discerned), such as from routing tables, neighbor device information, or other similar information depending on the type of network or communication protocol. The diagnostic information can include various parameter/metrics and device/system characteristics for a site, network and/or network devices of the network installation, and may relate to performance in various operations related to network communication. For example, the various parameters/metrics for a network device can include among other things the following categories: a radio or transmission medium metric, a version of a firmware/software, a traffic metric, a noise metric, a network metric and a site metric, or other device-related or network-related parameter or metric (e.g., examples in FIGS. 8 and 9). Such diagnostic information for the network devices of the network installation can also be collected (or determined from the collected information) and stored in memory over time period, e.g., a predefined time period, by the computer device 100. For example, the computer device 100 can obtain diagnostic information through or from communication with the network and/or a plurality of the network devices, through or from measuring, testing, computing or deriving transmission, reception, buffering, power and other characteristics associated with such communication, and/or through or from existing network functions/tests which are available in certain types of networks/protocols from which certain diagnostic may be requested from the network or certain types of network device(s). Such diagnostic information also can include characteristics of the network device and its components (e.g., firmware/software version, node type, etc.). In some embodiments, along with obtaining network information from or through communication with the network and the network devices, the computer device 100 can obtain some of the network information from a user (e.g., user input via a graphical user interface (GUI) provided by the software tool, accessing an electronic file(s), and/or other user input or initiated-input).

In other embodiments, instead of obtaining network information from or through communication with the network/network devices the computer device 100 can obtain network information and/or diagnostic information of a potential or actual network installation from a user, such as through user input via a GUI provided by the software tool, accessing an electronic file(s) including the network information, and/or other user input or initiated-input. For example, the computer device 100 can perform various analysis and associated operations as described herein for an actual network installation or a potential network installation (e.g., a design) from user inputted network information and/or diagnostic information (e.g., historical diagnostic information for the network and/or network devices).

In various embodiments, different types of network information and/or diagnostic information, which can include performance or other parameters/metrics of the network or network device(s), device specification, and/or information determined from such information (including actual or potential issue(s)), can have different quality values and/or quality weighting for the purpose of computing (or calculating) a quality index. Examples of diagnostic information can include the various example parameters/metrics described in the examples of FIGS. 8 and 9. The actual or potential issues can, for example, include a potential single-point of failure or other potential failure in the network installation (including those described herein), detection of outdated firmware/software for the network device(s), a metric(s)/parameter(s) for the network or network device(s) which exceeds or does not satisfy an associated threshold value or range thereby reflecting an actual or potential issue, or other installation issues.

In some embodiments, a smaller quality value and/or weight (or penalty) may be applied to network and diagnostic information and information determined therefrom (including actual/potential issue(s)) that negatively impact the performance or operation of the network installation (e.g., increased probability of failure or inoperability of the network, reduced performance of the network, etc.). A larger value and/or weight (or reward) may be applied to network and diagnostic information and information determined therefrom (including actual/potential non-issue(s)) that impact the performance or operation of the network installation in a positive or neutral manner (e.g., absence of potential single-point of failure or other potential failure(s), satisfactory or exceptional performance of the network or network device(s) or certain operation(s) thereof, etc.). A quality index may be computed for each of the network devices/nodes, which in turn may be used, if desired, to compute an aggregated network quality index for the network installation. A best or worst network device (or node) also may be identified from the plurality of network devices according to their quality index.

In various embodiments, the actual or potential issues (or a subset thereof) can be prioritized and presented to a user in a priority order (e.g., ranked by most significant or severe to less significant or severe, top five (or predefined number) of issues, etc.) along with prioritized recommended potential solutions for the issues.

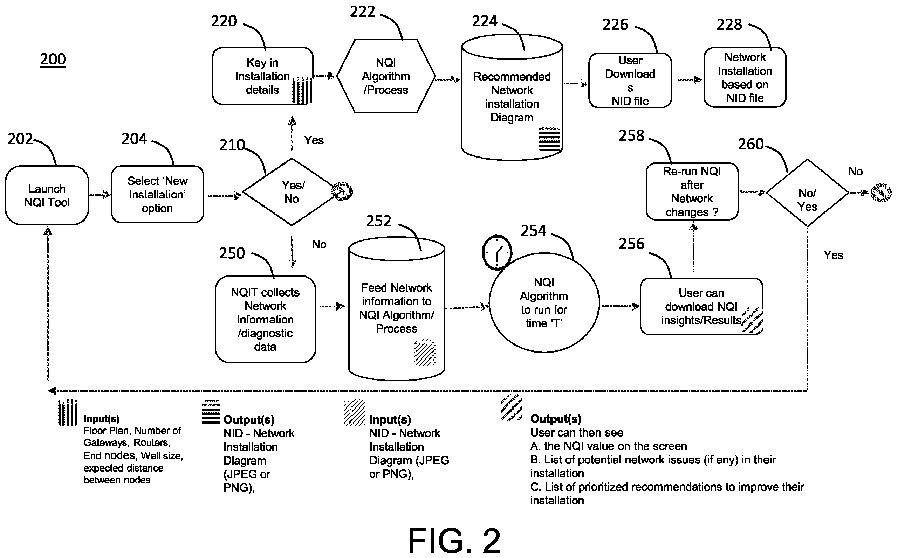

FIG. 2 illustrates a flow diagram of an example process 200 by which to evaluate a quality of a network installation in accordance with embodiments of the disclosure. For the purposes of explanation, the process 200 will be described with reference to a computer device, (e.g., 100 of FIG. 1). The computer device, via its processor(s) together with memory, can be configured to run/execute a software tool, such as a network quality index (NQI) software tool, to evaluate a network installation.

The process begins at block 202 in which the computer device launches the software tool.

At block 204, the computer device can select (or not) a New Installation option. The selection can be performed according to a user command or selection through a GUI of the tool.

At block 206, the computer device can determine whether New Installation option has been selected or not. In the event New Installation option is selected, the computer device proceeds to a sub-process of designing a potential network installation, which begins at block 220 where a user can input installation details. The inputted installation details can include network information, such as: site/floor plan(s); number of intermediary network devices/nodes such as gateway(s), router(s), end node(s), estimated wireless range of Devices (e.g., per a Specification sheet), switches, firewall(s) or other intermediary device/node; number of end network devices/nodes; wall size (e.g., length, height, width/thickness, etc.), expected distance between network nodes, and other desired characteristics or requirements for the network installation.

At block 222, the computer device implements the NQI algorithm/process to design an optimal or sufficiently operable network installation based on at least the inputted network information. In various embodiments, the NQI algorithm/process can implement a machine-learning (ML) algorithm/process/model with a reward function to design a potential network installation(s) (and if desired simulate operation of the potential network installation(s) to optimize the design). The reward function can be based on the quality index or value for attributes or characteristics of the installation of the network and devices thereof. The recommended design of the potential network installation can have the highest quality index or a sufficient quality index which satisfies a quality threshold value or range (e.g., greater than threshold value or range for an acceptable network installation, etc.), and can be stored in a memory accessible to the computer device.

At block 224, the computer device can output the recommended network installation in a desired format, such as a network installation diagram (NID), for use by the user (e.g., installer(s), technician(s), etc.). For example, the computer device can output a diagram of the recommended network installation, which can take the form of an electronic copy (e.g., JPEG, PNG, etc.) viewable on an output device such as a display or a hard copy, which is printed on an output device such as a printer.

At block 228, a network installation can be installed on a site based on the recommended network installation diagram.

Turning back to block 210 of the process 200, in the event New Installation option is not selected, the computer device proceeds to a sub-process of evaluating an actual/existing network installation, which begins at block 250 where the computer device obtains information for use in performing a quality analysis, such as network information and diagnostic information. The network and diagnostic information can be collected by having the computer device connect to the network and passively and/or actively monitor the network and its network devices. The network information can include a network topology/mapping of the network devices for the installation, or information from which the network topology can be determined. The diagnostic information as well as the network information can be collected over a time period, such as a predefined time period.

At block 252, the computer device feeds the diagnostic information and the network information (including the network topology or associated information) to the NQI algorithm/process to perform quality analysis (or analyses), e.g., NQI analysis. As shown by block 254, the computer device can run the NQI algorithm/process for a time period T (e.g., a predefined time period) as network and diagnostic information continue to be collected and fed into the NQI algorithm/process for analysis in order to generate insights/results. The insights/results from the NQI analysis can include:
- a quality index for each network device (or selected network devices such as the intermediary devices/nodes and/or the end devices/nodes) and identified network device(s) have the best or worst quality index,
- a quality index for the network (e.g., an aggregated quality index),
- a qualitative explanation or representation for a quality index in relation to quality thresholds or ranges (e.g., Poor, Fair, Good, Problem, Alarm, Warning, etc.),
- identification of actual or potential issues related to the installation, which may be prioritized by severity, significance, relevance, importance or impact or other factors,
- recommended potential solutions for the identified issues which may be prioritized by severity, significance, relevance, importance or impact or other factors, and
- other guidance, recommendations, predictions or results gleaned from an analysis of the network and/or diagnostic information to reflect or improve upon a quality of the network installation.

In some embodiments, the quality index for the network installation can be an aggregated quality index such as for the network, a work node quality index, a best node quality index, a quality index for a selected node. For example, an aggregated quality index can be computed based on quality index of the network devices and, if desired, also based on other factors, which may also be assigned a quality value and a weight according to category/type of the factor. The worst node quality index can refer to the lowest quality index of the network devices, and the best node quality index can refer to the highest quality index of the network devices. As previously explained, the quality index also can be represented if desired in a qualitative fashion, e.g., Poor, Fair, Good, etc., by QI threshold ranges. The insights/results can be stored in a memory accessible by the computer device. The insights/results (or subsets/portions thereof) can be outputted on an output device of the computer device, outputted (e.g., transmitted) to a remote device (e.g., transmitted to a project management computer system, user device, etc.), or outputted to a remote output device (e.g., printer, display, etc.).

Depending on the nature of the actual or potential issues, the recommended potential solutions can include but is not limited to: adding more routing node(s), node location realignment, replacing a battery of a network device(s), updating firmware/software for a network device(s) to a latest version, replacing a network device(s) of a routing node with a replacement network device having greater functionality, installing additional gateway(s) for redundancy, and/or making other changes to the current network installation configuration to improve the quality of the installation.

At block 256, the computer device can enable a user to output, such as download, the insights/results from the NQI analysis. For example, the output(s) can involve a display of the quality index (e.g., NQI value), a list of actual and/or potential network issues (if any) in the installation, and a list of prioritized recommendations (or recommended potential solutions) for improving the installation. Other information related to the network installation also may be outputted, such as the topology/mapping of the network devices of the network installation, to help identify problematic network device(s)/node(s) in the installation. For example, the problem device(s)/node(s) may be highlighted or discriminated on the topology/mapping in some fashion for ease of identification by a user. In various embodiments, the output may be provided through a graphical user interface (GUI) through which a user can customize the type and amount of information to be provided to the user, or customize the analysis configuration (including types of input, types of output, etc.). In other embodiments, the output may be provided to another remote device in electronic form (e.g., electronic report or file) or may be printed via a printer as a hard copy report.

The insights/results can be evaluated by the user, and employed to make one or more changes to the current network installation, such as for example according to one or more of the recommended potential solutions.

At block 260, the computer device determines whether the user would like to re-run the process for quality analysis, e.g., NQI analysis, after the changes or update to the network installation. If not, the process 200 ends. If the user would like to re-run the NQI analysis for the updated network installation, the computer device can proceed back to block 202 to launch the NQI software tool to enable the evaluation of the updated network installation.

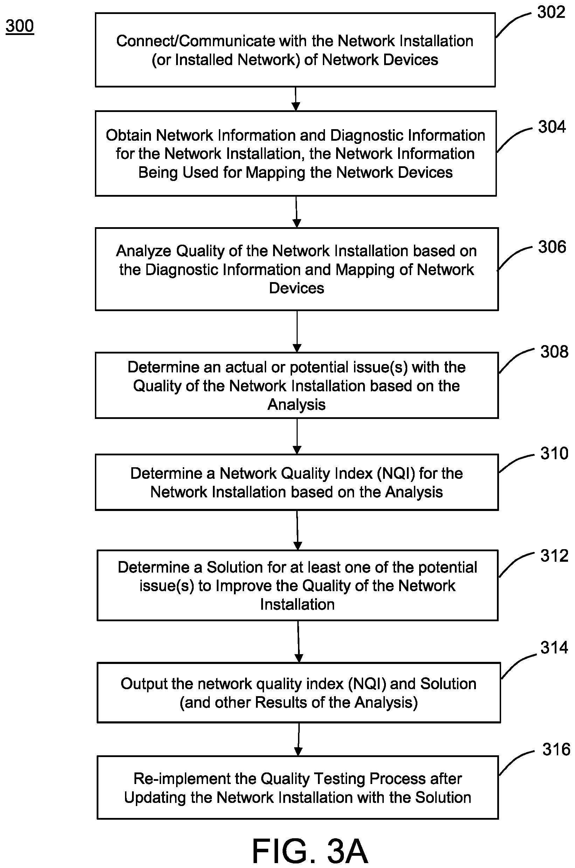

FIG. 3A illustrate a flow diagram of an example process 300 by which to evaluate a quality of a network installation in accordance with embodiments of the disclosure. For the purposes of explanation, the process 300 will be described with reference to a computer device, (e.g., 100 of FIG. 1). The computer device, such as via a processor(s) together with memory, is configured to run/execute a network installation software tool, such as the NQI software tool.

The process 300 begins at block 302 in which the computer device connects/communicates with the network installation, such as its network and network devices. The computer device can select a suitable protocol from a plurality of communication protocols, for communicating with the network of the network installation. In some embodiments, the protocol is a wireless protocol.

At block 304, the computer device obtains information for use in analyzing the network installation, such as for example network information and diagnostic information for the network installation. The network information can include network device information, such network topology/mapping of the network devices/nodes or information from which the network topology/mapping can be determined or discerned (e.g., an identity of the network devices and their location or relative location in the network installation), and other information as described herein. The diagnostic information can include diagnostic data for the site, network and/or network devices of the network installation, as well as characteristics of the network device (e.g., type of node, version of software/firmware, age of the device, etc.), or other information as described herein.

The network and diagnostic information can be obtained by passively and/or actively monitoring the network and its network devices/nodes. In some embodiments, the network information and/or diagnostic information may also be inputted or supplemented by a user.

In various embodiments, the network information and/or diagnostic information may be collected over a time period (e.g., a predefined time period), or collected until sufficient network and/or diagnostic information has been obtained to perform a sufficient quality analysis of the network installation.

At block 306, the computer device analyzes a quality of the network installation based on the diagnostic information and the network topology/mapping of network devices. The analysis may also be based on additional network information or other information, including information provided by the user.

At block 308, the computer device determines an actual or potential issue(s) with the quality of the network installation based on or as a result of the analysis.

At block 310, the computer device determines a quality index for the network installation based on or as a result of the analysis. In various embodiments, the quality index may be computed based on the determined actual and potential issue(s) of the installation, and/or other factors related to the quality of the network installation. In computing the quality index for the network, for the network device(s) or for other relevant quality parameter/metric for the installation, a quality value and/or weight may be applied to relevant parameters, metrics, network characteristics, network device characteristics, or issues by their type or category. The index (e.g., index, score or rating) may also be normalized or provided in the context of a maximum score.

At block 312, the computer device determines recommendations of potential solution(s) for one or more of the actual and/or potential issues to improve the quality of the network installation. For example, the potential solution(s) can include: adding more routing node(s), node location realignment, replacing a battery of a network device(s), updating firmware/software for a network device(s) to a latest version, replacing a network device(s) of a routing node with a replacement network device having greater functionality, installing additional gateway(s) for redundancy, and/or other potential solutions/recommendations for improving a quality of the network installation. In various embodiment, a machine learning approach can be employed to find optimal or sufficiently satisfactory potential solutions to the issues, which would result in a potentially higher quality index for the network installation when updated.

At block 314, the computer device can output the determined insights/results from the analysis, such as the quality index for the installation as well as other information related thereto, a list of the actual and/or potential issues and recommended potential solutions to the issues, and other guidance, insights, recommendations, predictions or results related to the quality of the network installation. The list of issues and their recommendations may be prioritized, e.g., in order of severity, significance, relevance, importance or impact or other factors.

At block 316, the computer device can re-implement the quality testing process, such as of the NQI software tool, after the network installation is updated with one or more of the recommended potential solutions.

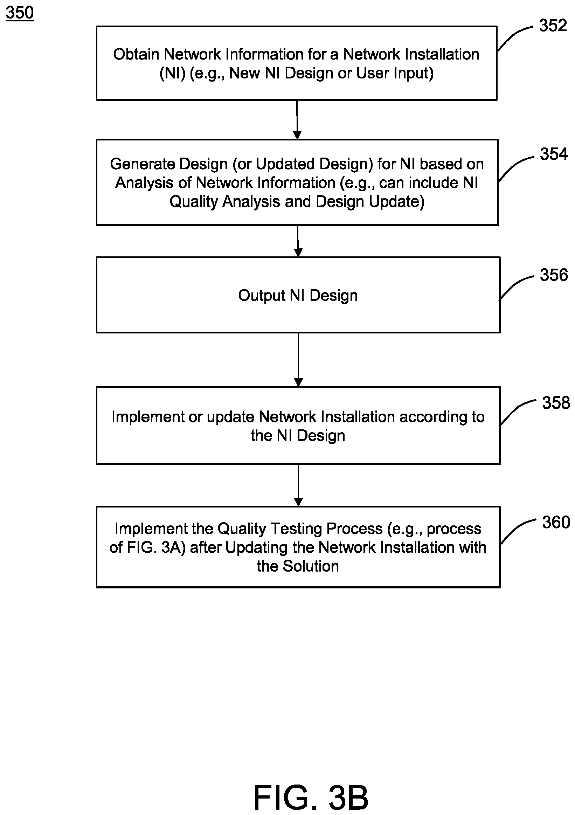

FIG. 3B illustrate a flow diagram of an example process 350 by which to evaluate a quality of a network installation in accordance with embodiments of the disclosure. For the purposes of explanation, the process 300 will be described with reference to a computer device, (e.g., 100 of FIG. 1). The computer device, such as via a processor(s) together with memory, is configured to run/execute a network installation software tool, such as a network quality index (NQI) software tool.

The process 350 begins at block 352 in which the computer device obtains at least network information for a network installation. The network information can be a design of an actual/existing or potential network installation (e.g., network installation design (NID) in JPEG, PNG or other suitable format), or user input of information of the network requirements for a network installation (e.g., site/floor plan, number of devices/nodes (e.g., routers, gateways, end devices, firewall, switches, etc.), wall thickness, application type, network type (e.g., wireless, wireline, etc.), etc.).

At block 354, the computer device can generate a new design for a network installation or update an existing design for a network installation based on the network information. The new or updated design can be determined based on quality analysis provided through the NQI software tool to provide an optimal or improved network installation design.

At block 356, the computer device outputs the recommended new or updated network installation design (e.g., in JPEG, PNG or other suitable format). The new or updated NID also can be stored in memory. The NID may have a quality index associated therewith, which may have been computed based on the obtained information, such as the network information, diagnostic information, and any other relevant information inputted to the NQI software tool. For an updated NID, the computer device may also output any determined network quality issues in the evaluated installation design and the solutions implemented in the updated NID.

At block 358, a user can implement or update the network installation according to the recommended NID.

At block 360, the computer device can implement the quality testing process of the NQI software tool after the network installation is installed or updated.

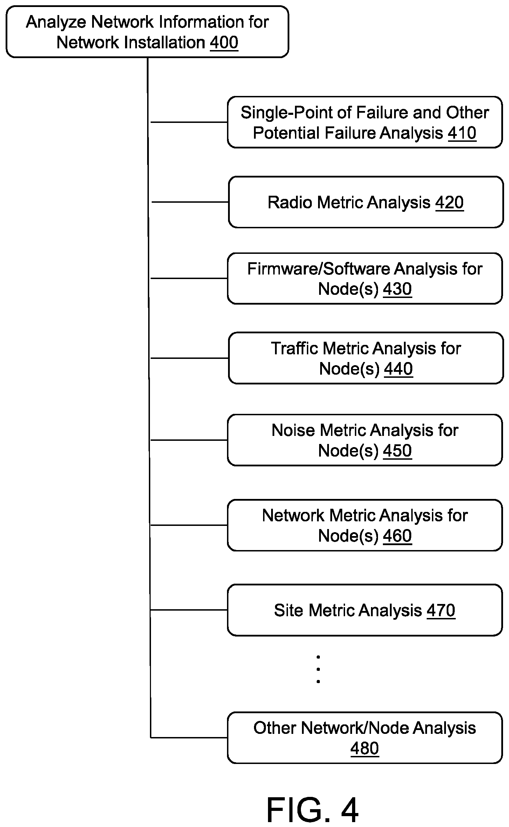

FIG. 4 illustrates an example process 400 by which network information, diagnostic information and/or other information relevant to the performance or operation of the network installation can be analyzed in accordance with embodiments of the disclosure. As generally shown in FIG. 4, the analysis 400 of a network installation performed by a computer device (e.g., 100 in FIG. 1), via the NQI software tool or the like, can involve the analysis of network information, diagnostic information and/or other information relevant to assessing a quality (e.g., performance quality) of a network installation. Such analysis can include: Single-Point of Failure and Other Potential Failure Analysis 410; Radio Metric Analysis 420; Firmware/Software Analysis for Node(s) 430; Traffic Metric Analysis for Node(s) 440; Noise Metric Analysis for Node(s) 450; Network Metric Analysis for Node(s) 460; Site Metric Analysis 470; and/or Other Network or Network Device(s) Analysis 480.

The analysis may involve a comparison of performance or operation parameter/metrics to associated threshold values or ranges to determine performance quality of a network device, a network, or a site and any issues associated therewith; identification of actual or potential issues or conditions on the network installation; identification of characteristics of the network or the network device(s) (including device specification) relevant to an assessment of device performance/capability; and so forth. Through such analysis, the quality of the network installation may be reflected as a quality index for the network installation; and installation issues and recommended potential solutions thereto may also be determined and outputted for further analysis, action, etc.

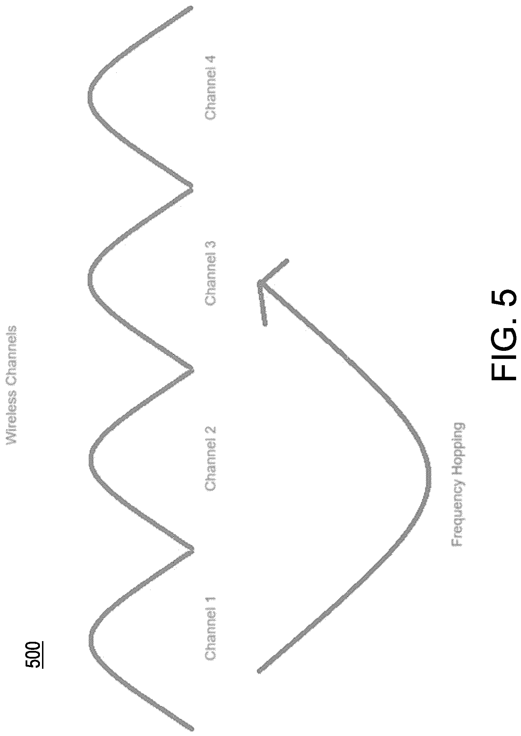

FIG. 5 illustrates an example of wireless communication 500 provided for a wireless network installation in accordance with embodiments of the disclosure. In this example, the network installation is a wireless network, which communicates through a wireless protocol (e.g., Bluetooth^{®}, etc.) using access point(s). As shown in this example, wireless communication on the network uses frequency hopping, in which communication may be conducted over four channels (e.g., Channels 1, 2, 3 and 4). Various frequencies are employed in the frequency hopping scheme. In this context, a good or satisfactory wireless installation may be dependent on the nature of "Quality metrics" (also referred to as Qualimetrics), which can include firmware/software version, radio metrics, RF noise metrics, network metrics, traffic metrics, and other performance or operation metrics. These and other quality metrics, as described herein, can be related to diagnostic information, which is obtained for use by the NQI software tool to perform quality analysis for a network installation, such as described herein.

The "Firmware/Software" version may be relevant to performance of wireless communication on the network installation. For example, the latest firmware for a network device could fix bugs related to message reception/transmission/routes, etc. Thus, there is a potential quality issues if a network device is not operating with the latest firmware.

The "Radio metrics" can include Receiver sensitivity, Transmitter output power, RF Noise Metrics, Clear channel assessment failures, and Lost messages.

The "Network Metrics" can include: Number of hops to destination, Next Hop RSSI (Receive Signal Strength Indicator), Next Hop Output Power, Number of potential routers in range, and Node type (e.g., routers versus leaf nodes).

The "Traffic Metrics" can include Message buffer size, Average Message buffer used, Maximum buffer used:

The above are provided as examples of parameter/metrics, which may be used in a quality analysis of a network installation. Other information (or data) related to the network installation, network and network device(s) may also be used in the quality analysis for the network installation.

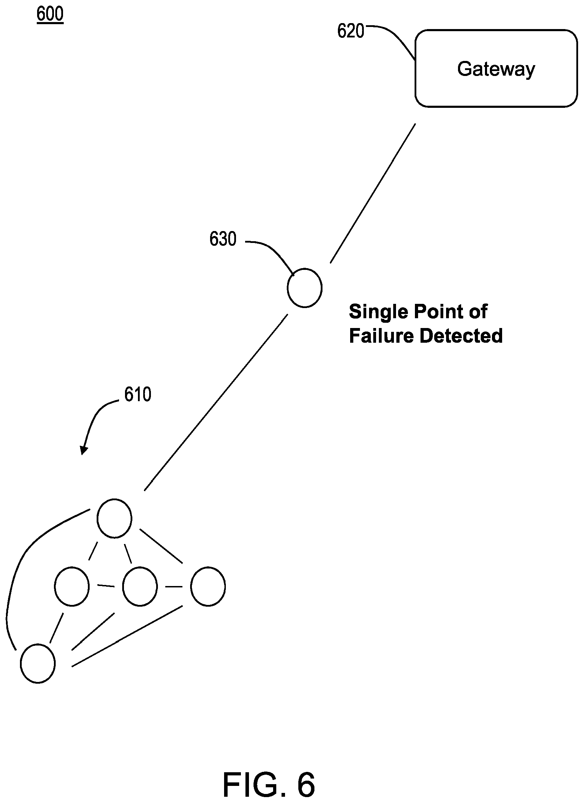

FIG. 6 illustrates a diagram of an example network installation 600 (or portion thereof) with at least one potential issue, in accordance with embodiments of the disclosure. In this example, there is shown a plurality of connected network devices/nodes 610 and a network device such as a gateway 620. The devices/nodes 610 is communicatively connected to the gateway across only a single intermediary or routing network device 630.

As shown in FIG. 6, the network installation 600 may face a potential issue of a single point failure in the future if the network device 630 fails. This is provided simply as one example of a potential issue, which may be determined through analysis of the network installation. Other examples of actual and/or potential issues for a network installation are described herein.

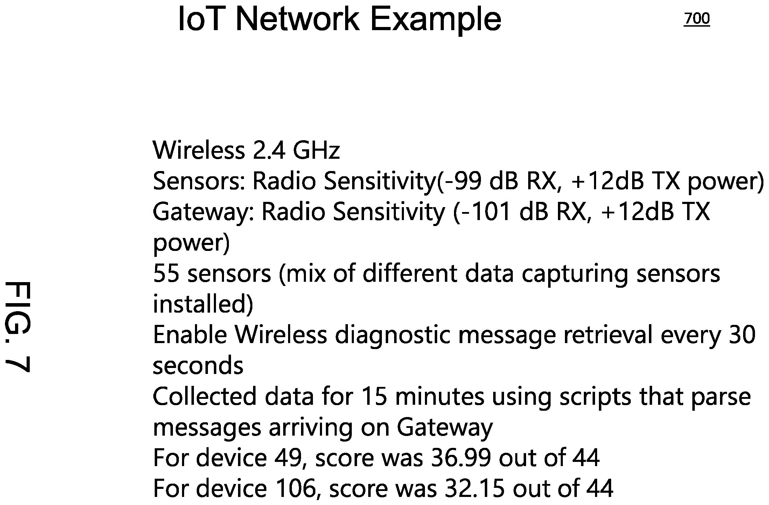

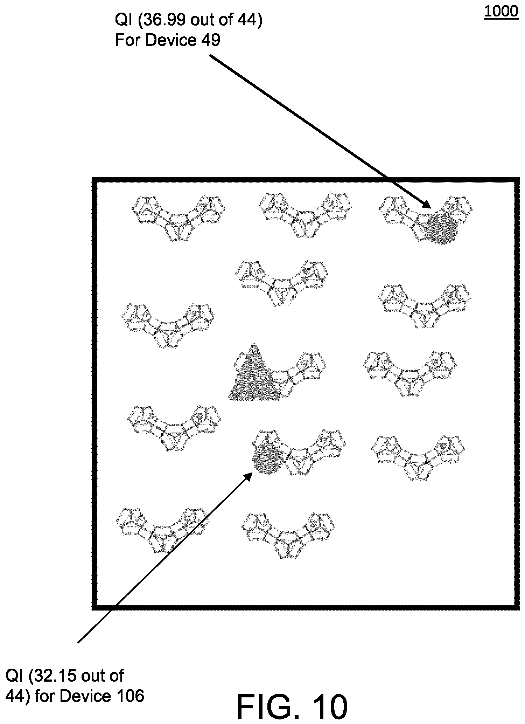

An example quality analysis of a network installation example, such as an Internet of Things (IoT) Network, is described below with reference to FIG. 7, FIG. 8, FIG. 9 and FIG. 10. FIG. 7 illustrates an Internet of Things (IoT) Network example 700. In this example, the network installation is a wireless network and includes a plurality of network devices such as sensors and a Gateway. There are 55 sensors. Through the analysis of the network and diagnostic information, quality indexes (QIs) are determined for network device 49, and network device 106 such as shown in an example network installation diagram 1000 (including site/floorplan and location of the network devices) of FIG. 10. From the analysis, the device 49 is determined to have a QI of 36.99 out of 44, and the device 106 is determined to have a QI of 32.15 out of 44. If desired, a total (or aggregated) quality index or an average quality index for the network devices can be compared versus the worst quality index(es) for a network device(s), and the installer can target specific devices for improvements.

Examples of how the quality index for device 49 and device 106 are computed are shown in the example chart 800 in FIG. 8 and chart 900 in FIG. 9, respectively. As shown in the examples of FIG. 8 and FIG. 9, the quality analysis for a network device of the installation can evaluate various collected parameters/metrics for the network installation. The parameters/metrics can include:
- Firmware/Software;
- Radio metrics;
- Traffic metrics;
- Noise metrics;
- Network metrics; and
- Site metrics (e.g., site size, number of nodes, number of routers, number of end devices).

As shown in the example charts 800 and 900 of FIGS 8 and 9 respectively, the type of parameters/metrics is categorized (e.g., A, B and/or C). Each category is assigned a maximum Quality-related Weight (e.g., A = 5; B =3; C = 1; A, C = 5 + 1 = 6; B, C = 3 + 1 = 4; etc.). Each of the parameters/metrics also can be selectively considered or not for a particular Installation analysis, e.g., by setting a Considered value to 1 (for consider) and 0 (for not consider). Depending on the collected information for the installation, a weight value out of a maximum weight value is assigned (e.g., assigned, determined, computed, calculated, derived, etc.) for each parameter/metric to be considered, and a total quality index (e.g., index, score, rating) is computed for the network device. As shown in the charts 800 and 900, the computed QI for device 49 is 36.99 out of 44, and the computed QI for device 106 is 32.15 out of 44.

The network analysis shown and described above with reference to the example of FIGS. 7-10 is provided as an example in the context of a wireless network. Accordingly, it should be understood that different types of information (e.g., parameters, metrics, actual issues, potential issues, technical specification for the network, technical specification for the network nodes/devices, etc.) can be collected and used to analyze a quality of different types of network installations which can employ different-types of communication protocols and network devices. The quality index for a network installation may also include different types of quality indexes for use by a user to evaluate and improve a quality of a network installation. The quality index for a network installation can include but is not limited to total/aggregated quality index for the network, worst device (or node) quality index, best device (or node) quality index, average device (or node)/node quality index, a device (or node) quality index for network device(s) (or node(s)) or selected network device(s) (or node(s)), and so forth.

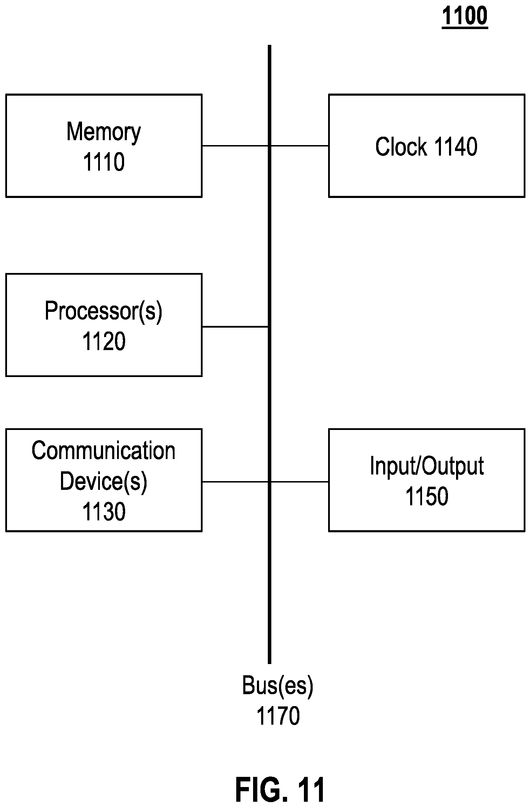

FIG. 11 illustrates example components of a computer device (or system) 1100, in accordance with embodiments of the disclosure. The device 1100 can include memory 1110, processor(s) 1120, communication device(s) 1130, clock 1140, input/output device(s) 1150, which can be communicatively connected. In this example, the various components can be communicatively connected via buses 1170. The clock 1040 can be used to time-stamp data or an event with a time value, and to synchronize operations within the device and with remote devices or systems. The communication device(s) 1130 can include transmitters and receivers for conducting wireless communications and/or wireline communications with other remote devices or a network(s).

The memory 1110 can store computer executable code, programs, software, or instructions, which when executed by a processor(s), controls the operations of the device 1100, including the various processes/algorithms described herein. The memory 1110 can also store other data used by the device 1100 or components thereof to perform the operations described herein. The other data can include but is not limited to collected/obtained information (e.g., network information, diagnostic information, threshold values or ranges, weighted values, or other information relevant to the operation of the device or features described herein), and other data described herein.

The processor(s) 1120, which interacts with the other components of the computer device, is configured to control or implement the various operations and functions described herein, including control of the components of the computer device 1100 and quality analysis of a network installation.

The input/output device(s) 1150 can include one or more input devices, and one or more output devices. The input devices can include a keyboard, keypad, touch panel or screen, microphone, camera or other known user input devices for use on computer devices or systems. The output devices can include a display screen, speaker, printer, smart output device, or other known output devices in or for use with computer devices or systems.

It is understood that embodiments of the disclosure herein may be configured as a system, method, or combination thereof. Accordingly, embodiments of the present disclosure may be comprised of various means including hardware, software, firmware or any combination thereof.

It should also be understood that the example embodiments disclosed and taught herein are susceptible to numerous and various modifications and alternative forms. Thus, the use of a singular term, such as, but not limited to, "a" and the like, is not intended as limiting of the number of items. Furthermore, the naming conventions for the various components, functions, characteristics, thresholds, and other elements used herein are provided as examples, and can be given a different name or label. The use of the term "or" is not limited to exclusive "or", but can also mean "and/or".

It will be appreciated that the development of an actual, real commercial application incorporating aspects of the disclosed embodiments will require many implementation specific decisions to achieve the developer's ultimate goal for the commercial embodiment. Such implementation specific decisions may include, and likely are not limited to, compliance with system related, business related, government related and other constraints, which may vary by specific implementation, location and from time to time. While a developer's efforts might be complex and time consuming in an absolute sense, such efforts would nevertheless be a routine undertaking for those of skill in this art having the benefit of this disclosure.

Using the description provided herein, the example embodiments may be implemented as a machine, process, or article of manufacture by using standard programming and/or engineering techniques to produce programming software, firmware, hardware, or any combination thereof.

Any resulting program(s), having computer-readable program code, may be embodied on one or more tangible or non-transitory computer-usable media such as resident memory devices, smart cards or other removable memory devices, or transmitting devices, thereby making a computer program product or article of manufacture according to the embodiments. As such, the terms "article of manufacture" and "computer program product" as used herein are intended to encompass a computer program that exists permanently or temporarily on any computer-usable or storage medium or in any transmitting medium which transmits such a program.

A processor(s), controller(s) or processing unit(s) as described herein can be a processing system, which can include one or more processors, such as CPU, controller, ASIC, or other processing unit or circuitry, which controls or performs the operations of the devices or systems, described herein. Memory/storage devices can include, but are not limited to, disks, solid state drives, optical disks, removable memory devices such as smart cards, SIMs, WIMs, semiconductor memories such as RAM, ROM, PROMS, etc. Transmitting mediums or networks can include, but are not limited to, transmission via wireline communication, wireless communication (e.g., Radio Frequency (RF) communication, Bluetooth^{®}, Wi-Fi, Li-Fi, etc.), the Internet, intranets, telephone/modem-based network communication, hard-wired/cabled communication network, satellite communication, and other stationary or mobile network systems/communication links.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be appreciated that the concepts, systems, circuits and techniques sought to be protected herein are not limited to use in the example applications described herein (e.g., industrial applications), but rather may be useful in substantially any application where it is desired to receive decision support for each step in an automated fashion. While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the spirit and scope of the disclosure as defined in the appended claims.

Having described preferred embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

Accordingly, it is submitted that the scope of the patent should not be limited to the described embodiments but rather should be limited only by the spirit and scope of the following claims.

## Claims

1. A method of evaluating a network installation including a network having network devices, the method comprising:
obtaining network information and diagnostic information for the network installation, the network information including a topology of the network devices or information from which the topology is determinable for the network installation;
performing, via a processor, an analysis of a quality of the network installation based on at least the diagnostic information and the topology of the network devices to identify at least one actual or potential quality issue for the network installation and to compute a quality index for the network installation; and
outputting, via the processor, the quality index for the network installation.

2. The method according to claim 1, wherein, obtaining network information and diagnostic information for the network installation comprises:
connecting via a communication device to the network to monitor the network and a plurality of the network devices of the network installation; and
collecting the network information and the diagnostic information.

3. The method according to claim 2, wherein the processor is configured to passively or actively monitor the network and a plurality of the network devices of the network installation, and to collect the network information and the diagnostic information.

4. The method according to claim 2, wherein the processor is configured to both passively and actively monitor the network and a plurality of the network devices of the network installation, and to collect the network information and the diagnostic information.

5. The method according to claim 2, wherein the communication device communicates with the plurality of network devices over the connection using a transmission protocol selected from a plurality of selectable transmission protocols, the plurality of transmission protocols including at least a wireless protocol.

6. The method according to claim 1, wherein the diagnostic information comprises at least one parameter or metric for a network device or node, the at least one parameter or metric comprising a radio or transmission metric, a version of a firmware or software, a traffic metric, a noise metric, a network metric, or a site metric.

7. The method according to claim 1, wherein the at least one actual or potential issue for the network or one or more of the network devices comprises one or more of: a single point of failure, weak signal strengths, Radio Frequency (RF) noisy area, connectivity issue, low battery level, cybersecurity issues, problematic firmware version, or high traffic.

8. The method according to claim 1, wherein the quality index comprises an aggregate quality index, a worst node quality index, a best node quality index, or a selected node quality index.

9. The method according to claim 1, further comprising providing via the processor prioritized recommendations of potential solutions for the at least one actual or potential quality issue.

10. The method according to claim 9, wherein at least one of the potential solutions comprises one or more of: adding a routing device, node location realignment, replacing a battery of a network device of the network devices, updating firmware or software for one or more of the network devices to a latest version, replacing one or more routing network devices with one or more replacement network devices having greater functionality, or installing one or more additional gateways for redundancy.

11. The method according to claim 9, further comprising:
re-implementing via the processor the operations of obtaining network information and diagnostic information, performing an analysis of a quality of the network installation, and outputting the quality index, after the network installation is updated according to one or more of the recommendations.

12. The method according to claim 1, further comprising:
designing or updating via the processor a design of the installation network before installation or update thereof, and providing the design or updated design of the installation network to a user, the processor being configured to generate a potential installation network design and to perform an analysis of a quality of the potential network installation design to provide a new or updated design of the installation network which is optimized or improved.

13. A system for implementing the method of any one of claims 1 to 12, the system comprising a communication device, a memory, and a processor.

14. A computer program comprising instructions which, when the program is executed by a computer, cause the computer to carry out the method of any one of claims 1 to 12.

15. A computer-readable medium having stored thereon the computer program of claim 14.
